# DEMANDE DE BREVET EUROPEEN

(11) **EP 1 281 557 A1**
(43) Date de publication de la demande: **05.02.2003**
(21) Numéro de dépôt: 02291743.9
(22) Date de dépôt: 11.07.2002
(51) Int. Cl.: B60K 6/04

(54) **Groupe motopropulseur hybride comportant un train épicycloidal verrouillable et dispositif de roue libre**

(30) Priorité: 31.07.2001 FR 0110230
(71) Demandeur: Renault s.a.s., 92100 Boulogne Billancourt (FR)
(72) Inventeur: Chauvelier, Eric, 78230 Le Mesnil Saint Denis (FR)

(57) **Abrégé**

L'invention propose un groupe motopropulseur (10) hybride, du type dans lequel des éléments d'un train épicycloïdal (12) tels qu'une couronne (18), un planétaire (14), et un porte-satellites (16) sont liés en rotation à des organes du groupe motopropulseur tels qu'un rotor (24) d'une première machine électrique (26), un rotor (28) d'une deuxième machine électrique (30), un arbre (20) de sortie d'un moteur thermique (22), et un pont (32), du type dans lequel le rotor (28) de la deuxième machine électrique (30) et le pont (32) sont liés en rotation au même élément du train épicycloïdal (10), caractérisé en ce qu'il comporte au moins un dispositif (36) d'accouplement commandé permettant sélectivement de lier en rotation l'élément du train épicycloïdal (10) qui est lié à l'arbre de sortie (20) du moteur thermique (22) avec un des éléments restants du train épicycloïdal (10) pour verrouiller tous les éléments (14,16,18) du train épicycloïdal (10) et déterminer ainsi au moins un rapport dit de prise directe, comportant aussi un dispositif de roue libre (39) interposé entre l'arbre (20) de sortie du morteur thermique (22) et le dispositif (36) d'accouplement commandé.

## Description

L'invention concerne un groupe motopropulseur de véhicule automobile à motorisation hybride.

L'invention concerne plus particulièrement un groupe motopropulseur de véhicule automobile à motorisation hybride fonctionnant selon plusieurs modes, du type dans lequel des éléments d'un train épicycloïdal tels qu'une couronne, un planétaire, et un porte-satellites sont liés en rotation à des organes du groupe motopropulseur tels qu'un arbre de sortie d'un moteur thermique, un rotor d'une première machine électrique susceptible de fonctionner indifféremment en moteur ou en générateur, un rotor d'une deuxième machine électrique susceptible de fonctionner indifféremment en moteur ou en générateur, et un pont destiné à transmettre une puissance motrice à des roues du véhicule, et du type dans lequel le rotor de la deuxième machine électrique et le pont sont liés en rotation au même élément du train épicycloïdal.

On connaît de nombreux exemples de groupes motopropulseurs de ce type.

Le document EP-A-0.769.403 décrit et représente un groupe motopropulseur de ce type qui est susceptible de fonctionner suivant plusieurs modes, à savoir notamment un mode tout électrique, un mode de fonctionnement thermique permettant la recharge des batteries lorsque le véhicule roule, un mode de fonctionnement hybride, et un mode de rechargement de la batterie à l'arrêt.

Un problème se pose lorsque le véhicule roule à des vitesses élevées en mode de fonctionnement hybride.

En effet, dans cette configuration, la puissance délivrée par le moteur thermique transite obligatoirement par le train épicycloïdal dont les éléments sont mobiles les uns par rapport aux autres..

Le rendement global du groupe motopropulseur est ainsi grandement altéré par le rendement mécanique du train épicycloïdal ainsi que par le rendement électrique des machines électriques.

Ainsi, une partie de la puissance délivrée par le moteur thermique est elle dissipée en pure perte sous forme de chaleur et de frottement et ne participe pas à la traction du véhicule.

Aussi, pour de grandes vitesses du véhicule, il est nécessaire de pouvoir transmettre la puissance délivrée par le moteur thermique au pont qui entraîne les roues du véhicule, en minimisant les pertes électriques et mécaniques.

Dans ce but l'invention propose un groupe motopropulseur permettant de transmettre directement la puissance délivrée par le moteur thermique au pont qui entraîne les roues du véhicule.

Dans ce but, l'invention propose un groupe motopropulseur du type précédemment décrit, caractérisé en ce qu'il comporte au moins un dispositif d'accouplement commandé permettant sélectivement de lier en rotation l'élément du train épicycloïdal qui est lié à l'arbre de sortie du moteur thermique avec un des éléments restants du train épicycloïdal pour verrouiller tous les éléments du train épicycloïdal les uns par rapport aux autres et déterminer ainsi au moins un rapport dit de prise directe.

Selon d'autres caractéristiques de l'invention :
- le groupe motopropulseur comporte au moins un dispositif de freinage commandé qui est destiné à freiner le rotor de la première machine électrique,
- le dispositif d'accouplement est un embrayage commandé,
- le rotor de la première machine électrique est lié en rotation au planétaire du train épicycloïdal,
- le rotor de la première machine électrique est lié en rotation au planétaire du train épicycloïdal par l'intermédiaire d'un engrenage,
- le dispositif de freinage commandé comporte au moins un plateau, qui est monté fixe à rotation par rapport à un élément fixe du groupe motopropulseur, coaxialement au planétaire, et un disque, agencé en regard du plateau et mobile axialement par rapport à celui-ci, qui est coaxial et lié en rotation au planétaire du train épicycloïdal,
- le rotor de la première machine électrique est coaxial et lié en rotation au planétaire du train épicycloïdal,
- le dispositif de freinage commandé comporte au moins un plateau, qui est coaxial et lié à un stator de la première machine électrique, et un disque, agencé en regard du plateau et mobile axialement par rapport à celui-ci, qui est coaxial et lié en rotation au rotor de la première machine électrique et au planétaire du train épicycloïdal,
- l'élément de sortie du train épicycloïdal comporte un pignon coaxial qui engrène simultanément avec un pignon porté par le rotor de la deuxième machine électrique et avec un pignon d'attaque du pont,
- l'élément de sortie du train épicycloïdal est directement lié en rotation au rotor de la deuxième machine électrique et il comporte un pignon coaxial qui engrène un pignon d'attaque du pont,
- l'arbre de sortie du moteur thermique est lié en rotation au porte-satellites du train épicycloïdal, et le rotor de la deuxième machine électrique et le pont sont tous deux liés en rotation à la couronne du train épicycloïdal,
- l'arbre de sortie du moteur thermique est lié en rotation à la couronne du train épicycloïdal, et le rotor de la deuxième machine électrique et le pont sont tous deux liés en rotation au porte-satellites du train épicycloïdal,
- le groupe motopropulseur comporte un dispositif de roue libre interposé entre l'arbre de sortie du moteur thermique et le dispositif d'accouplement commandé,
- le groupe motopropulseur comporte une unité de commande qui est susceptible de commander le dispositif de freinage commandé et le dispositif d'accouplement commandé pour déterminer au moins :
   - un mode dit de prise directe selon lequel le dispositif de freinage commandé est inactif et selon lequel le dispositif d'embrayage commandé est actif pour verrouiller tous les éléments du train épicycloïdal les uns par rapport aux autres et déterminer ainsi le rapport dit de prise directe.
   - un mode dit de réduction selon lequel le dispositif de freinage commandé est actif et selon lequel le dispositif d'embrayage commandé est inactif pour faire fonctionner le train épicycloïdal en réducteur,
   - un mode dit de parking, selon lequel le dispositif de freinage commandé est actif et selon lequel le dispositif d'embrayage commandé est actif pour immobiliser le train épicycloïdal et le pont.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe d'un premier mode de réalisation d'un groupe motopropulseur selon l'invention ;
- la figure 2 est une vue schématique en coupe d'un deuxième mode de réalisation du groupe motopropulseur selon l'invention ; et
- la figure 3 est une vue schématique en coupe d'un premier troisième mode de réalisation du groupe motopropulseur selon l'invention.

Dans la description qui va suivre, des chiffres de référence identiques désignent des pièces identiques ou ayant des fonctions similaires.

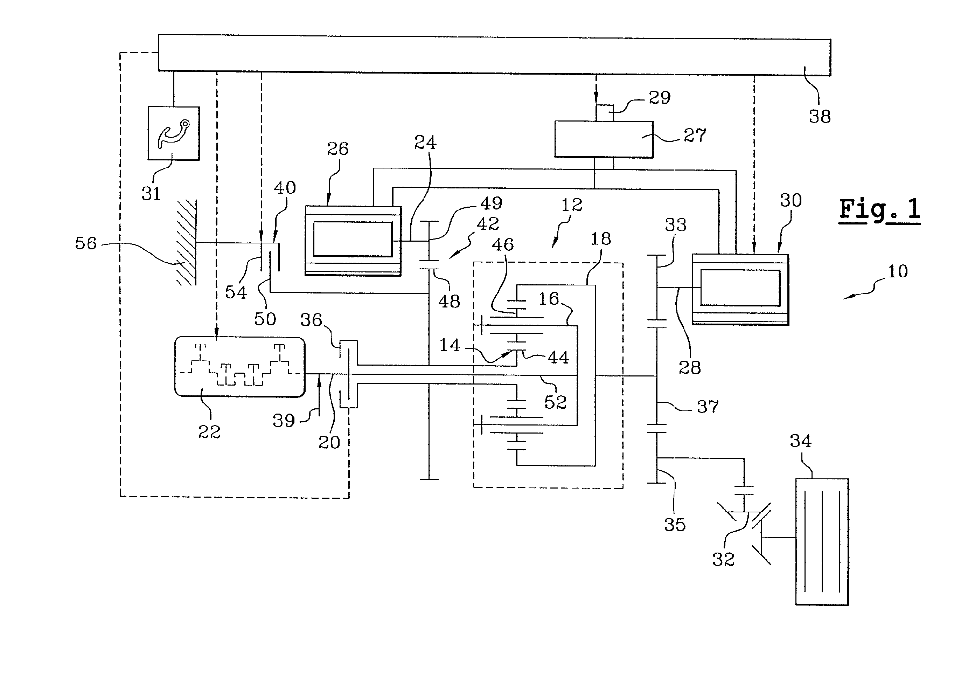

On a représenté aux figures 1 à 3 trois modes de réalisation d'un groupe motopropulseur 10 conforme à l'invention.

De manière connue, un tel groupe motopropulseur 10 comporte un train épicycloïdal 12 dont les éléments, notamment un porte-satellites 14, un planétaire 16, et une couronne 18, sont liés en rotation à des organes du groupe motopropulseur 10 tels qu'un arbre 20 de sortie d'un moteur thermique 22, un rotor 24 d'une première machine électrique 26, un rotor 28 d'une deuxième machine électrique 30, et un pont 32 qui est destiné à entraîner au moins une roue 34 du véhicule. Les deux machines électriques 26 et 30 sont susceptibles de fonctionner indifféremment en moteur ou en un générateur, et elles sont à ce titre susceptibles d'échanger des puissances électriques avec une batterie d'accumulateurs 27.

Par ailleurs, de manière connue, le rotor 28 de la deuxième machine 30 électrique et le pont 32 sont liés en rotation au même élément du train épicycloïdal 12.

Le groupe motopropulseur 10 comporte une unité de commande 38 qui est susceptible de commander les organes du groupe motopropulseur 10 selon différents modes de fonctionnement, notamment au moins un mode de fonctionnement dit "hybride" au cours duquel le moteur thermique 22 et les machines électriques 26, 30 participent à la traction et au moins un mode de fonctionnement dit "électrique pur" au cours duquel seules les machines électriques 26, 30 participent à la traction. Ainsi, l'unité de commande 38 est susceptible de commander le fonctionnement du moteur thermique 22, le fonctionnement d'un contrôleur 29 de la batterie d'accumulateurs 27, le fonctionnement de la première machine électrique 26, et le fonctionnement de la deuxième machine électrique 18 selon différents modes. A cet effet, l'unité de commande 38 reçoit en permanence des informations en provenance des différents organes du groupe motopropulseur 10 et, en réponse à l'actionnement d'une pédale d'accélérateur 31 et en vertu d'une programmation interne, émet des consignes de fonctionnement à l'intention du moteur thermique 22, du contrôleur 29 de la batterie 27, de la première machine électrique 26, et de la deuxième machine électrique 30.

L'émission de telles consignes étant connue de l'état de la technique, il n'en sera pas fait plus état dans la présente description.

Cette disposition est particulièrement avantageuse car elle permet notamment de bénéficier de rapports de réduction variables.

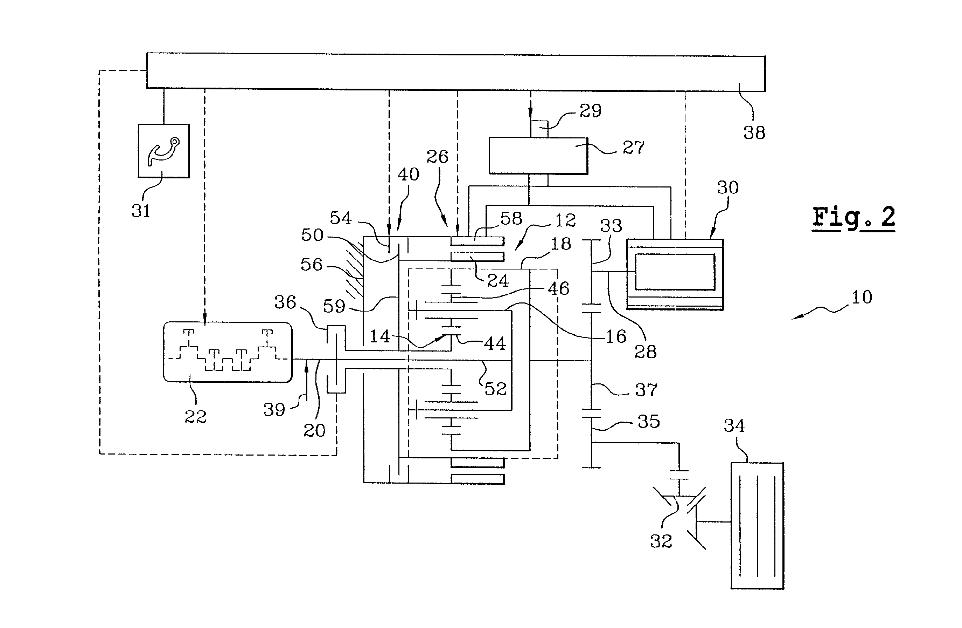

A titre d'exemple, dans les premier et deuxième modes de réalisation qui ont été représentés aux figures 1 et 2, le rotor 24 de la première machine électrique est lié en rotation au planétaire 14 du train épicycloïdal 12, l'arbre 20 du moteur thermique est lié au porte-satellites 16 du train épicycloïdal 12, et le pont 32 et le rotor 28 de la deuxième machine électrique 30 sont tous deux liés en rotation à la couronne 18 du train épicycloïdal 12.

De ce fait, si la première machine électrique 26 fonctionne en générateur et la deuxième machine électrique 30 fonctionne en moteur, on bénéficie d'un groupe motopropulseur 10 autorisant des vitesses faibles ou moyennes. Si, au contraire, la première machine électrique 26 fonctionne en moteur en tournant en sens inverse du moteur thermique 14, et si la deuxième machine électrique 30 fonctionne en générateur, on obtient une vitesse élevée de la couronne 28 du train épicycloïdal 12 autorisant des vitesses élevées du véhicule.

Il importe, dans un tel groupe motopropulseur 10, de pouvoir bénéficier d'un rapport de transmission dit "long" permettant de réduire la consommation du moteur thermique 22 sur les parcours de type routier ou autoroutier.

Dans ce but, conformément à l'invention, le groupe motopropulseur 10 comporte d'une manière générale au moins un dispositif 36 d'accouplement commandé permettant sélectivement de lier en rotation l'élément du train épicycloïdal 12 qui est lié à l'arbre 20 de sortie du moteur thermique 22 avec un des éléments restants du train épicycloïdal 10 pour verrouiller tous les éléments 14, 16, 18 du train épicycloïdal 10 les uns par rapport aux autres et déterminer ainsi au moins un rapport dit de prise directe.

Dans les modes de réalisation préférés de l'invention qui ont été représentés aux figures 1 à 3, le dispositif 36 d'accouplement commandé 36 est constitué d'un embrayage commandé qui est piloté, au même titre que les autres organes du groupe motopropulseur 10, par l'unité 38 de commande.

Par ailleurs, le groupe motopropulseur 10 comporte au moins un dispositif 40 de freinage commandé qui est destiné à freiner le rotor 24 de la première machine électrique 26. Ce dispositif 40 de freinage est aussi commandé par l'unité 38 de commande.

Dans les modes de réalisation préférés de l'invention qui ont été représentés aux figures 1 à 3, le rotor 24 de la première machine électrique 26 est lié en rotation au planétaire 14 du train épicycloïdal 10. Cette configuration n'est pas limitative de l'invention, et le rotor 24 de la première machine électrique 26 pourrait être lié à un autre élément du train épicycloïdal, l'association de la première machine électrique 26 et d'un élément déterminé du train épicycloïdal 10 dépendant des rapports de transmission recherchés.

Plus particulièrement, selon le premier mode de réalisation qui est représenté à la figure 1, le rotor 24 de la première machine électrique 26 est lié en rotation au planétaire 14 du train épicycloïdal 10 par l'intermédiaire d'un engrenage 42.

A cet effet, le planétaire 14 est par exemple réalisé sous la forme d'un élément tubulaire monobloc qui comporte, de la droite vers la gauche de la figure 1, un jeu de dentures 44 qui engrène avec les satellites 46 du train épicycloïdal 10, un jeu de dentures 48 qui engrène avec un pignon 49 porté par le rotor 24 de la première machine électrique 26, et un disque 50, coaxial au planétaire 14, qui fait partie du dispositif de freinage commandé.

Un arbre 52, lié au porte-satellites 16 du train épicycloïdal 12, traverse le planétaire 14.

Par ailleurs, le rotor 28 de la deuxième machine électrique 30 et le pont 32 sont tous deux liés en rotation à un même élément de sortie du train épicycloïdal 10. En particulier, un pignon 35 d'attaque, entraîné par le pont 32, et un pignon 33 qui est porté par le rotor 28 de la deuxième machine électrique 30 engrènent tous deux avec un pignon 37 qui est directement lié en rotation à la couronne 18 du train épicycloïdal 10.

Dans ce mode de réalisation, l'arbre de sortie 20 du moteur thermique 22 est lié directement en rotation au porte-16 satellites du train épicycloïdal 10.

De plus, le groupe motopropulseur 10 comporte un dispositif 39 de roue libre qui est monté sur l'arbre de sortie 20 du moteur thermique 22 de manière à l'empêcher de tourner en sens inverse du sens normal de rotation du moteur 22, notamment au cours des modes de fonctionnement purement électriques du groupe motopropulseur pour lesquelles le moteur thermique 22 est arrêté.

Le dispositif 40 de freinage commandé comporte au moins un plateau 54, qui est monté fixe à rotation par rapport à un élément 56 fixe du groupe motopropulseur 10. Le plateau 54 est coaxial au planétaire 14, et est agencé en regard du disque 50. Le plateau 54 et le disque 50 sont mobiles l'un par rapport à l'autre, c'est à dire que l'un ou l'autre des disque 50 et plateau 54 est mobile axialement, de manière à pouvoir coopérer par friction respectivement avec le plateau 54 ou bien le disque 50 afin d'immobiliser ainsi le planétaire 14.

Dans cette configuration, comme on le verra ultérieurement dans la suite de la présente description, lorsque le dispositif 40 de freinage commandé est inactif et lorsque l'embrayage 36 formant le dispositif d'accouplement commandé est actif, les éléments 14, 16, 18 du train épicycloïdal 12 sont verrouillés les uns par rapport aux autres et la puissance du moteur thermique 22 peut cheminer directement de l'arbre 20 de sortie du moteur 22 au pont 32 en passant par le train épicycloïdal 12 qui se comporte alors comme un accouplement rigide.

La figure 2 représente un deuxième mode de réalisation de l'invention qui est sensiblement analogue au premier mode de réalisation précédemment décrit, à cette différence près que le rotor 24 de la première machine électrique 26 est coaxial au planétaire 14 est lié directement en rotation au planétaire 14 du train épicycloïdal 10.

De préférence, le rotor 24 de la première machine électrique 26 est de surcroît coaxial à l'ensemble du train épicycloïdal 10. Cette configuration permet de proposer un groupe motopropulseur 10 qui est particulièrement compact suivant la direction axiale.

Dans cette configuration, le planétaire 14 est par exemple réalisé sous la forme d'un élément tubulaire monobloc qui comporte, de la droite vers la gauche de la figure 1, le jeu de dentures 44 qui engrène avec les satellites 46 du train épicycloïdal 10 et un support 59 sensiblement en forme de disque qui porte à la fois le rotor 24 de la première machine électrique 26 et un disque 50, faisant partie du dispositif 40 de freinage commandé. L'arbre 52, qui est lié au porte-satellites 16 du train épicycloïdal 12, traverse le planétaire 14.

Par ailleurs, le dispositif 40 de freinage commandé comporte un plateau 54, qui est coaxial à un stator 58 de la première machine électrique. Le plateau 54 est solidaire dudit stator 58 et il est fixé à l'élément fixe 56 du groupe motopropulseur 10.

Le disque 50 est agencé en regard du plateau 54, et il est coaxial et lié en rotation au rotor 24 de la première machine électrique 26 et au planétaire 14 du train épicycloïdal 10. D'une manière analogue au mode de réalisation précédent, le disque 50 et le plateau sont mobiles axialement l'un par rapport à l'autre.

Dans cette configuration, on comprendra que lorsque le dispositif 40 de freinage commandé est inactif et lorsque l'embrayage 36 formant le dispositif 36 de freinage est actif, les éléments 14, 16, 18 du train épicycloïdal 12 sont verrouillés les uns par rapport aux autres et la puissance du moteur thermique 22 peut cheminer directement de l'arbre 20 de sortie du moteur 22 au pont 32 en passant par le train épicycloïdal 10 qui se comporte alors comme un accouplement rigide.

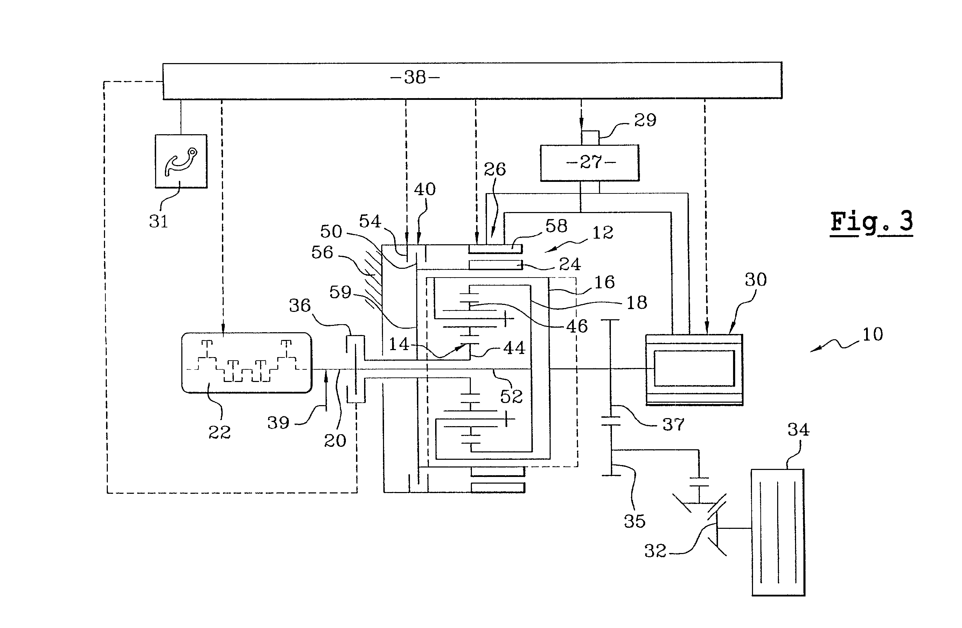

La figure 3 représente un troisième mode de réalisation de l'invention qui est sensiblement analogue au deuxième mode de réalisation précédemment décrit, à ces différences près que l'arbre de sortie 20 du moteur thermique 22 est directement lié en rotation à la couronne du train épicycloïdal 10 et que le rotor 28 de la deuxième machine électrique 30 et le pont 32 sont tous deux liés en rotation au porte-satellites 16 du train épicycloïdal 10.

Cette configuration permet de proposer des rapports de réduction différents entre les différents éléments du train épicycloïdal 10.

De préférence, dans ce troisième mode de réalisation, le porte-satellites 16 qui forme l'élément de sortie du train épicycloïdal 10 est directement lié en rotation au rotor 28 de la deuxième machine électrique 30 et il comporte un pignon 37 coaxial qui engrène un pignon 35 d'attaque du pont 32.

Avantageusement, quelque soit le mode de réalisation envisagé, l'unité 38 de commande est susceptible de commander le dispositif 40 de freinage commandé et l'embrayage 36 formant le dispositif d'accouplement commandé pour déterminer différents modes de fonctionnement du groupe motopropulseur 10.

En particulier, l'unité 38 de commande peut déterminer, comme précédemment évoqué, un mode dit de prise directe selon lequel le dispositif 40 de freinage commandé est inactif et selon lequel le dispositif 36 d'embrayage commandé est actif pour verrouiller tous les éléments 14, 16, 18 du train épicycloïdal les uns par rapport aux autres et déterminer ainsi le rapport dit de prise directe.

De plus, l'unité 38 de commande peut aussi déterminer un mode dit de réduction selon lequel le dispositif 40 de freinage commandé est actif et selon lequel le dispositif 36 d'embrayage commandé est inactif. Dans cette configuration, le train épicycloïdal, qui a son planétaire 14 bloqué, fonctionne en réducteur.

Enfin, l'unité 38 de commande peut déterminer un mode dit de parking, selon lequel le dispositif 40 de freinage commandé est actif et selon lequel le dispositif 36 d'embrayage commandé est actif. Dans cette configuration, tous les éléments 14, 16, 18 du train épicycloïdal 10 sont immobilisés et de ce fait le pont 32 et les roues 34 sont immobilisés.

Les autres modes de fonctionnement "électrique pur", dans lesquels seules les deux machines électriques 26 et 30 participent à la traction, ou "hybride", dans lesquels le moteur thermique 22 et les deux machines électriques 26 et 30 participent à la traction sont aussi mis en oeuvre dans l'invention. Toutefois, leur principe étant largement connu de l'état de la technique, il n'en sera pas fait état de manière plus détaillée dans la présente description.

L'invention permet donc avantageusement de bénéficier d'un groupe motopropulseur particulièrement compact et offrant de nombreuses possibilités d'obtentions de rapports de réduction, tout en offrant des performances analogues à celle d'un véhicule conventionnel à moteur thermique pour des vitesses élevées, avec l'avantage de caractéristiques de consommation et de pollution réduites.

## Revendications

1. Groupe motopropulseur (10) de véhicule automobile à motorisation hybride fonctionnant selon plusieurs modes, du type dans lequel des éléments d'un train épicycloïdal (12) tels qu'une couronne (18), un planétaire (14), et un porte-satellites (16) sont liés en rotation à des organes du groupe motopropulseur (10) tels qu'un arbre (20) de sortie d'un moteur (22) thermique, un rotor (24) d'une première machine électrique (26) susceptible de fonctionner indifféremment en moteur ou en générateur, un rotor (28) d'une deuxième machine électrique (30) susceptible de fonctionner indifféremment en moteur ou en générateur, et un pont (32) destiné à transmettre une puissance motrice à des roues (34) du véhicule, et du type dans lequel le rotor (28) de la deuxième machine électrique (30) et le pont (32) sont liés en rotation à un même élément de sortie du train épicycloïdal (12), et du type qui comporte au moins un dispositif (36) d'accouplement commandé permettant sélectivement de lier en rotation l'élément du train épicycloïdal (10) qui est lié à l'arbre (20) de sortie du moteur thermique (22) avec un des éléments restants du train épicycloïdal (12) pour verrouiller tous les éléments (14, 16, 18) du train épicycloïdal les uns par rapport aux autres et déterminer ainsi au moins un rapport dit de prise directe,
**caractérisé en ce qu'**il comporte un dispositif (39) de roue libre interposé entre l'arbre (20) de sortie du moteur thermique (22) et le dispositif (36) d'accouplement commandé.

2. Groupe motopropulseur (10) selon la revendication précédente, **caractérisé en ce qu'**il comporte au moins un dispositif (40) de freinage commandé qui est destiné à freiner le rotor (24) de la première machine électrique (26).

3. Groupe motopropulseur (10) selon l'une des revendications précédentes, **caractérisé en ce que** le dispositif (36) d'accouplement est un embrayage commandé.

4. Groupe motopropulseur (10) selon l'une quelconque des revendications précédentes, **caractérisé en ce que** le rotor (24) de la première machine électrique (26) est lié en rotation au planétaire (14) du train épicycloïdal (12).

5. Groupe motopropulseur (10) selon la revendication précédente, **caractérisé en ce que** le rotor (24) de la première machine électrique (26) est lié en rotation au planétaire (14) du train épicycloïdal (12) par l'intermédiaire d'un engrenage (42).

6. Groupe motopropulseur (10) selon la revendication précédente, **caractérisé en ce que** le dispositif (40) de freinage commandé comporte au moins :
- un plateau (54), qui est monté fixe à rotation par rapport à un élément fixe (56) du groupe motopropulseur (10), coaxialement au planétaire (14), et
- un disque (50), agencé en regard du plateau (54) et mobile axialement par rapport à celui-ci, qui est coaxial et lié en rotation au planétaire (14) du train épicycloïdal (12).

7. Groupe motopropulseur (10) selon la revendication 4, **caractérisé en ce que** le rotor (24) de la première machine électrique (26) est coaxial et lié en rotation au planétaire (14) du train épicycloïdal (12).

8. Groupe motopropulseur (10) selon la revendication précédente, **caractérisé en ce que** le dispositif (40) de freinage commandé comporte au moins :
- un plateau (54), qui est coaxial et lié à un stator (58) de la première machine électrique (26), et
- un disque (50), agencé en regard du plateau (54)et mobile axialement par rapport à celui-ci, qui est coaxial et lié en rotation au rotor (24) de la première machine électrique (26) et au planétaire (14) du train épicycloïdal (12).

9. Groupe motopropulseur (10) selon l'une des revendications précédentes, **caractérisé en ce que** l'élément de sortie du train épicycloïdal (12) comporte un pignon coaxial (37) qui engrène simultanément avec un pignon (33)porté par le rotor (28) de la deuxième machine électrique (30) et avec un pignon (35) d'attaque du pont (32).

10. Groupe motopropulseur (10) selon l'une quelconque des revendications 1 à 8, **caractérisé en ce que** l'élément de sortie du train épicycloïdal (12) est directement lié en rotation au rotor (28) de la deuxième machine électrique et **en ce qu'**il comporte un pignon coaxial (37) qui engrène un pignon d'attaque (35) du pont.

11. Groupe motopropulseur (10) selon l'une des revendications 1 à 10, **caractérisé en ce que** l'arbre (20) de sortie du moteur thermique (22) est lié en rotation au porte-satellites (16) du train épicycloïdal (10) et **en ce que** le rotor (28) de la deuxième machine électrique (30) et le pont (32) sont tous deux liés en rotation à la couronne (18) du train épicycloïdal (12).

12. Groupe motopropulseur (10) selon l'une quelconque des revendications 1 à 10, **caractérisé en ce que** l'arbre (20) de sortie du moteur thermique (22) est lié en rotation à la couronne (18) du train épicycloïdal (12) et **en ce que** le rotor (28) de la deuxième machine électrique (30) et le pont (32) sont tous deux liés en rotation au porte-satellites (16) du train épicycloïdal (12).

13. Groupe motopropulseur (10) selon l'une quelconque des revendications précédentes, **caractérisé en ce qu'**il comporte une unité (38) de commande qui est susceptible de commander le dispositif (40) de freinage commandé et le dispositif (36) d'accouplement commandé pour déterminer au moins:
- un mode dit de prise directe selon lequel le dispositif (40) de freinage commandé est inactif et selon lequel le dispositif (36) d'embrayage commandé est actif pour verrouiller tous les éléments (14, 16, 18) du train épicycloïdal (12) les uns par rapport aux autres et déterminer ainsi le rapport dit de prise directe.
- un mode dit de réduction selon lequel le dispositif (40) de freinage commandé est actif et selon lequel le dispositif (36) d'embrayage commandé est inactif pour faire fonctionner le train épicycloïdal (12) en réducteur,
- un mode dit de parking, selon lequel le dispositif (40) de freinage commandé est actif et selon lequel le dispositif (36) d'embrayage commandé est actif pour immobiliser le train épicycloïdal (12) et le pont (32).
